# EUROPÄISCHE PATENTSCHRIFT

(11) **EP 3 206 154 B1**
(45) Veröffentlichungstag und Bekanntmachung des Hinweises auf die Patenterteilung: **13.06.2018**
(21) Anmeldenummer: 16155540.4
(22) Anmeldetag: 12.02.2016
(51) Int. Cl.: G06F 21/57, H04L 29/06

(54) **VERFAHREN UND VORRICHTUNGEN ZUM SICHEREN ÜBERMITTELN VON NUTZDATEN**
METHOD AND DEVICES FOR THE SECURE TRANSMISSION OF USER DATA
PROCEDE ET DISPOSITIFS DESTINES A LA TRANSMISSION FIABLE DE DONNEES UTILES

(43) Veröffentlichungstag der Anmeldung: 16.08.2017
(73) Patentinhaber: Deutsche Telekom AG, 53113 Bonn (DE)
(72) Erfinder: Fuchs, Burkhard, 57319 Bad Berleburg (DE); Stücker, Olaf, 57482 Wenden (DE); Kügler, Dennis, 53121 Bonn (DE); Klein, Dominik, 53129 Bonn (DE)
(74) Vertreter: Patentship Patentanwaltsgesellschaft mbH

(56) Entgegenhaltungen:
- Texas Instruments: "Secure In-Field Firmware Updates for MSP MCUs", Application Report SLAA682-November 2015, 1. November 2015 (2015-11-01), XP055288092, Gefunden im Internet: URL:http://www.ti.com/lit/an/slaa682/slaa6 82.pdf [gefunden am 2016-07-13]
- / Atmel: "Atmel AT02333: Safe and Secure Bootloader Implementation for SAM3/4", Application Note, 1. Januar 2013 (2013-01-01), XP055288100, Gefunden im Internet: URL:http://www.atmel.com/images/atmel-4214 1-sam-at02333-safe-and-secure-bootloader-i mplementation-for-sam3-4_application-note. pdf [gefunden am 2016-07-13]
- ROGERS A ET AL: "A low overhead hardware technique for software integrity and confidentiality", COMPUTER DESIGN, 2007. ICCD 2007. 25TH INTERNATIONAL CONFERENCE ON, IEEE, PISCATAWAY, NJ, USA, 7. Oktober 2007 (2007-10-07), Seiten 113-120, XP031308340, ISBN: 978-1-4244-1257-0

## Beschreibung

Die Erfindung betrifft Verfahren und Vorrichtungen zum sicheren Übermitteln von Nutzdaten. Insbesondere betrifft die Erfindung ein Verfahren zum sicheren Übermitteln von Nutzdaten von einem Hintergrundsystem, insbesondere einem Server, an ein Sicherheitselement, ein Hintergrundsystem, insbesondere einen Server, zum sicheren Übermitteln von Nutzdaten an ein Sicherheitselement sowie ein entsprechendes Sicherheitselement.

Sicherheitselemente in Form von Chipkarten werden vielfach als Sicherheitsdokumente verwendet, beispielsweise in Form eines elektronischen Ausweisdokuments, einer Signaturkarte oder dergleichen. Dabei verfügen moderne Sicherheitselemente in der Regel über einen Speicher sowie einen Prozessor und sind mittels eines Betriebssystems dazu eingerichtet, Sicherheitsapplikationen auszuführen. Anwendungsbeispiele für solche Sicherheitsapplikationen sind eine Authentisierung gegenüber einem Terminal, die Herstellung eines gesicherten Datenkommunikationskanals, das elektronische Signieren von Daten sowie das Verifizieren von Signaturen und dergleichen. Auf diese Weise können derartige Sicherheitselemente dazu eingesetzt werden, mit beliebigen Dienstanbietern zu interagieren, um sich beispielsweise für elektronische Transaktionen, z.B. über das Internet, zu authentisieren und diese auf gesicherte Weise durchzuführen. Weiter können Sicherheitselemente zum Speichern von Daten, wie z.B. persönlichen und/oder sicherheitsrelevanten Daten sowie sonstigen Nutzdaten, eingesetzt werden und beispielsweise Grenzkontroll- oder Zugangskontrollsysteme unterstützen.

Häufig verfügen Sicherheitselemente über eine geeignete Kommunikationsschnittstelle, beispielsweise eine RF-oder NFC-Kommunikationsschnittstelle, um kontaktlos mit einem Terminal bzw. einem mit dem Terminal verbundenen Server eines Hintergrundsystems kommunizieren zu können.

Bei Betriebssystemen für PCs ist es bekannt, mittels Softwareupdates zum einen die Funktionalität eines Betriebssystems nachzurüsten oder zu verändern und zum anderen Sicherheitsmechanismen zu verbessern, beispielsweise durch das Schließen entdeckter Sicherheitslücken. Hierbei umfasst ein Softwareupdatemechanismus üblicherweise eine Authentizitätsprüfung, wodurch sichergestellt werden kann, dass nur solche Softwareupdates installiert werden, deren Authentizität durch den Hersteller des Updates garantiert ist.

Im Rahmen von Sicherheitselementen, insbesondere Chipkarten, sind Softwareupdates bekannt, welche die Funktionalität der Sicherheitselements, d.h. der auf dem Sicherheitselement implementierten Applikationen, aktualisieren oder erweitern, die auf dem Betriebssystem des Sicherheitselements laufen. Ein Softwareupdatemechanismus kann in diesem Umfeld ebenfalls eine Authentizitätsprüfung umfassen. Entsprechende Standards für ein solches Applikationsmanagement auf Sicherheitselementen sind bekannt, beispielsweise der Standard "Global Platform Specification". Gemäß diesem Standard wird das Softwareupdate installiert, indem zwischen einem Server eines Hintergrundsystems und dem Sicherheitselement eine verschlüsselte Verbindung aufgebaut wird. Die auf dem Server vorhandenen unverschlüsselten Updatedaten werden dann über die Verbindung zum Sicherheitselement übertragen und nach erfolgreicher Authentizitätsprüfung installiert.

In mehreren Anwendungsszenarien werden Sicherheitselemente über einen langen Zeitraum ausgegeben. Beispielsweise sollen Sicherheitselemente in Form von elektronischen Ausweisdokumenten über einen Zeitraum von zehn Jahren oder mehr im Feld betrieben werden können. Es ist nicht auszuschließen, dass über derartig lange Zeiträume die ursprünglichen Sicherheitsmechanismen des Betriebssystems eines Sicherheitselements ihre Wirksamkeit verlieren oder sogar vollständig kompromittiert werden, unter anderem durch entdeckte Sicherheitslücken in der Hardware oder im Betriebssystem des Sicherheitselements. Ferner können auch technische und/oder kryptoanalytische Fortschritte dazu führen, dass die Sicherheit der zum Ausgabezeitpunkt eines Sicherheitselements verwendeten kryptographischen Verfahren beeinträchtigt wird, beispielsweise aufgrund von zu kurzen Schlüssellängen und/oder technischen und/oder kryptoanalytischen Fortschritten, die es ermöglichen, aufgrund von physisch beobachtbaren Phänomenen die Sicherheitsfunktionalität eines Sicherheitselement mittels eines sogenannten Seitenkanalangriffes zu kompromittieren.

Oftmals können derartige Sicherheitsprobleme durch Softwareupdates der Sicherheitsmechanismen des Betriebssystems eines Sicherheitselements behoben werden. Die direkte Nutzung von etablierten Techniken von Softwareupdates für PC-Betriebssysteme oder für Anwendungen auf Sicherheitselementen führt dabei aber zu den folgenden Problemen.

Ein Softwareupdatemechanismus kann selbst einem Angreifer als Seitenkanal dienen oder einen Angriff mittels Seitenkanalanalyse vereinfachen, wenn der Mechanismus es einem Angreifer ermöglicht, Kryptooperationen mit der zum Zeitpunkt des Softwareupdates genutzten und möglicherweise abgeschwächten Sicherheitsfunktionalität des Sicherheitselements durchzuführen, um physisch beobachtbare Phänomene zu erzeugen. Ferner muss ein Softwareupdatemechanismus garantieren, dass die Vertraulichkeit der Updatedaten vom Zeitpunkt der Erstellung auf Herstellerseite bis hin zur Aktivierung nach Transfer auf das Sicherheitselement durchgängig gegeben ist. Erhält ein Angreifer Zugriff auf die Updatedaten, so können durch Reverse-Engineering direkte Rückschlüsse auf die zugrunde liegende Sicherheitslücke des Sicherheitselements gezogen werden. Ein Sicherheitselement weist in der Regel sowohl eine eingeschränkte Speicher- bzw. Kommunikationskapazität als auch eine beschränkte Rechenkapazität auf, was die Komplexität der bei einem Softwareupdatemechanismus für Sicherheitselement einsetzbaren Kryptooperationen beschränkt. Schließlich muss ein Softwareupdatemechanismus sicherstellen, dass die Authentizität der Updatedaten vor der Installation auf dem Sicherheitselement sichergestellt ist.

Vor diesem Hintergrund ist es die Aufgabe der vorliegenden Erfindung, verbesserte Verfahren und Vorrichtungen zum sicheren Übertragen von Nutzdaten bereitzustellen, insbesondere von Nutzdaten in Form eines Softwareupdates für ein Sicherheitselement.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum sicheren Übermitteln von Nutzdaten an ein Sicherheitselement, wobei das Verfahren umfasst: das Bereitstellen eines Verschlüsselungsschlüssels K_{ENC} und eines Prüfwertschlüssels K_{MAC} auf dem Sicherheitselement; das Verschlüsseln der Nutzdaten mittels des Verschlüsselungsschlüssels K_{ENC} unter Verwendung einer Chiffre, um wenigstens einen ersten Chiffretext c₁ und einen zweiten Chiffretext c₂ zu generieren; das Übermitteln eines Datensatzes an das Sicherheitselement, wobei der vollständig übermittelte Datensatz den ersten Chiffretext c₁ umfasst, den zweiten Chiffretext c₂, einen Prüfwert des ersten Chiffretextes h(c₁), einen Prüfwert des zweiten Chiffretextes h(c₂), einen Prüfwert eines ersten schlüsselbasierten Prüfwerts h(MAC₁), wobei in den ersten schlüsselbasierten Prüfwert MAC₁ der Prüfwert des ersten Chiffretextes h(c₁) eingeht, einen Prüfwert eines zweiten schlüsselbasierten Prüfwerts h(MAC₂), wobei in den zweiten schlüsselbasierten Prüfwert MAC₂ der erste schlüsselbasierte Prüfwert MAC₁ und der Prüfwert des zweiten Chiffretextes h(c₂) eingehen, sowie eine Signatur über den Prüfwert des ersten Chiffretextes und den Prüfwert des ersten schlüsselbasierten Prüfwerts Sign₁[h(c₁)∥h(MAC₁)].

Gemäß einer Ausführungsform des ersten Aspekts der Erfindung geht in den ersten schlüsselbasierten Prüfwert MAC₁ ferner ein Initialisierungsparameter IV_{MAC} ein.

Gemäß einer Ausführungsform des ersten Aspekts der Erfindung werden beim Schritt des Übermittelns des Datensatzes an das Sicherheitselement eine erste Nachricht, welche den Prüfwert des ersten Chiffretextes h(c₁) und den Prüfwert des ersten schlüsselbasierten Prüfwerts h(MAC₁) umfasst, und eine zweite Nachricht, welche den Prüfwert des zweiten Chiffretextes h(c₂) und den Prüfwert des zweiten schlüsselbasierten Prüfwerts h(MAC₂) umfasst, an das Sicherheitselement übermittelt.

Gemäß einer Ausführungsform des ersten Aspekts der Erfindung umfasst die erste Nachricht ferner die Signatur über den Prüfwert des ersten Chiffretextes und den Prüfwert des ersten schlüsselbasierten Prüfwerts Sign₁[h(c₁)∥h(MAC₁)].

Gemäß einer Ausführungsform des ersten Aspekts der Erfindung umfasst das Verfahren die weiteren Schritte, dass in Reaktion auf das Übermitteln der ersten Nachricht an das Sicherheitselement die Signatur über den Prüfwert des ersten Chiffretextes h(c₁) und den Prüfwert des ersten schlüsselbasierten Prüfwerts h(MAC₁) vom Sicherheitselement überprüft wird und, falls die Signatur vom Sicherheitselement nicht verifiziert werden kann, das Sicherheitselement den Vorgang abbricht.

Gemäß einer Ausführungsform des ersten Aspekts der Erfindung umfasst die zweite Nachricht den ersten Chiffretext c₁.

Gemäß einer Ausführungsform des ersten Aspekts der Erfindung umfasst der Datensatz ferner eine Signatur über den Prüfwert des zweiten schlüsselbasierten Prüfwerts Sign2[h(MAC2)].

Gemäß einer Ausführungsform des ersten Aspekts der Erfindung wird beim Schritt des Übermittelns des Datensatzes an das Sicherheitselement eine weitere Nachricht an das Sicherheitselement übermittelt, welche die Signatur über den Prüfwert des zweiten schlüsselbasierten Prüfwerts Sign₂[h(MAC₂)] umfasst.

Gemäß einer Ausführungsform des ersten Aspekts der Erfindung handelt es sich bei dem Prüfwert des ersten Chiffretextes um einen Hashwert des ersten Chiffretextes h(c₁) und bei dem Prüfwert des zweiten Chiffretextes um einen Hashwert des zweiten Chiffretextes h(c₂).

Gemäß einer Ausführungsform des ersten Aspekts der Erfindung handelt es sich bei der Chiffre, die zum Verschlüsseln der Nutzdaten mittels des Verschlüsselungsschlüssels K_{ENC} verwendet wird, um eine Blockchiffre und/oder eine Stromchiffre.

Gemäß einer Ausführungsform des ersten Aspekts der Erfindung handelt es sich bei der Chiffre, die zum Verschlüsseln der Nutzdaten mittels des Verschlüsselungsschlüssels K_{ENC} verwendet wird, um eine Stromchiffre, die in einem schlüsselbasierten Teil des Verfahrens einen Schlüsselstrom generiert, mittels dem in einem nicht schlüsselbasierten Teil des Verfahrens der erste Chiffretext c₁ und der zweite Chiffretext c₂ generiert werden.

Gemäß einer Ausführungsform des ersten Aspekts der Erfindung handelt es sich bei der Chiffre, die zum Verschlüsseln der Nutzdaten mittels des Verschlüsselungsschlüssels K_{ENC} verwendet wird, um eine AES-Blockchiffre, insbesondere eine AES-Blockchiffre im OFB-Modus oder CTR-Modus, oder um eine TDES-Blockchiffre.

Gemäß einer Ausführungsform des ersten Aspekts der Erfindung sind der erste schlüsselbasierte Prüfwert und der zweite schlüsselbasierte Prüfwert ein MAC, insbesondere ein CMAC oder CBC-MAC, und werden unter Verwendung der AES-Blockchiffre oder der TDES-Blockchiffre berechnet, die auch zur Verschlüsselung verwendet wird.

Gemäß einer Ausführungsform des ersten Aspekts der Erfindung kann zum Verschlüsseln der Nutzdaten mittels des Verschlüsselungsschlüssels K_{ENC} und zum Erstellen der schlüsselbasierten Prüfwerte auch eine AES-Blockchiffre im Galois/CTR-Modus verwendet wird.

Gemäß einer Ausführungsform des ersten Aspekts der Erfindung umfasst das Bereitstellen des Verschlüsselungsschlüssels K_{ENC} und des Prüfwertschlüssels K_{MAC} auf dem Sicherheitselement den Schritt des Berechnens eines Geheimnisses und den Schritt des Ableitens des Verschlüsselungsschlüssels K_{ENC} und des Prüfwertschlüssels K_{MAC} aus dem berechneten Geheimnis.

Gemäß einer Ausführungsform des ersten Aspekts der Erfindung umfasst der Datensatz ferner einen öffentlichen Schlüssel eines ephemeralen Schlüsselpaars PA und der Schritt des Berechnens eines Geheimnisses umfasst das Berechnen des Geheimnisses auf der Basis des öffentlichen Schlüssels des ephemeralen Schlüsselpaars PA und eines auf dem Sicherheitselement sicher hinterlegten privaten Schlüssels dB.

Gemäß einer Ausführungsform des ersten Aspekts der Erfindung umfasst der Datensatz ferner eine Signatur über den öffentlichen Schlüssel des ephemeralen Schlüsselpaars PA oder zumindest über einen signifikanten Teil davon.

Gemäß einem zweiten Aspekt betrifft die Erfindung ein Sicherheitselement mit: einer Kommunikationsschnittstelle, die ausgebildet ist, einen von einem Hintergrundsystem übermittelten Datensatz zu empfangen, wobei der vollständig übermittelte Datensatz einen ersten Chiffretext c₁ umfasst, einen zweiten Chiffretext c₂, einen Prüfwert des ersten Chiffretextes h(c₁), einen Prüfwert des zweiten Chiffretextes h(c₂), einen Prüfwert eines ersten schlüsselbasierten Prüfwerts h(MAC₁), wobei in den ersten schlüsselbasierten Prüfwert MAC₁ der Prüfwert des ersten Chiffretextes h(c₁) eingeht, einen Prüfwert eines zweiten schlüsselbasierten Prüfwerts h(MAC₂), wobei in den zweiten schlüsselbasierten Prüfwert MAC₂ der erste schlüsselbasierte Prüfwert MAC₁ und der Prüfwert des zweiten Chiffretextes h(c₂) eingehen, sowie eine Signatur über den Prüfwert des ersten Chiffretextes und den Prüfwert des ersten schlüsselbasierten Prüfwerts Sign₁[h(c₁)∥h(MAC₁)]; und einem Prozessor, der ausgebildet ist, auf der Basis eines Verschlüsselungsschlüssels K_{ENC} und eines Prüfwertschlüssels K_{MAC} den Datensatz zu verifizieren und den ersten Chiffretext c₁ und den zweiten Chiffretext c₂ zu entschlüsseln.

Gemäß einem dritten Aspekt betrifft die Erfindung ein Hintergrundsystem, insbesondere einen Server, mit: einem Prozessor, der ausgebildet ist, Nutzdaten mittels eines Verschlüsselungsschlüssels K_{ENC} unter Verwendung einer Chiffre zu verschlüsseln, um wenigstens einen ersten Chiffretext c₁ und einen zweiten Chiffretext c₂ zu erhalten; und einer Kommunikationsschnittstelle, die ausgebildet ist, einen Datensatz an ein Sicherheitselement zu übermitteln, wobei der vollständig übermittelte Datensatz den ersten Chiffretext c₁ umfasst, den zweiten Chiffretext c₂, einen Prüfwert des ersten Chiffretextes h(c₁), einen Prüfwert des zweiten Chiffretextes h(c₂), einen Prüfwert eines ersten schlüsselbasierten Prüfwerts h(MAC₁), wobei in den ersten schlüsselbasierten Prüfwert MAC₁ der Prüfwert des ersten Chiffretextes h(c₁) eingeht, einen Prüfwert eines zweiten schlüsselbasierten Prüfwerts h(MAC₂), wobei in den zweiten schlüsselbasierten Prüfwert MAC₂ der erste schlüsselbasierte Prüfwert MAC₁ und der Prüfwert des zweiten Chiffretextes h(c₂) eingehen, sowie eine Signatur über den Prüfwert des ersten Chiffretext und den Prüfwert des ersten schlüsselbasierten Prüfwerts Sign₁[h(c₁)∥h(MAC₁)].

Weitere Ausführungsbeispiele werden Bezug nehmend auf die beiliegenden Zeichnungen erläutert. Es zeigen:
- Fig. 1: eine schematische Darstellung eines Kommunikationssystems mit einem Server eines Hintergrundsystems und einem Sicherheitselement gemäß einer Ausführungsform;
- Fig. 2: eine schematische Darstellung eines Verfahrens zum sicheren Übertragen von Nutzdaten von einem Server eines Hintergrundsystems an ein Sicherheitselement gemäß einer Ausführungsform;
- Fig. 3: eine schematische Darstellung eines Datensatzes, der für die sichere Übertragung von Nutzdaten von einem Server eines Hintergrundsystems an ein Sicherheitselement gemäß einer Ausführungsform verwendet werden kann; und
- Fig. 4: eine schematische Darstellung des Ablaufs eines möglichen Verfahrens zum Verschlüsseln der Nutzdaten in einem Hintergrundsystem gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne vom Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

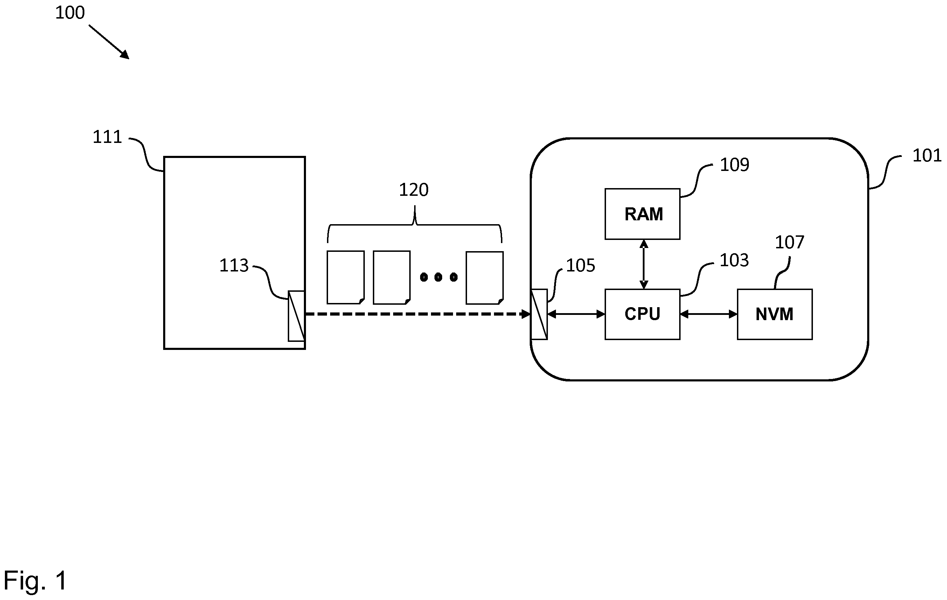

Figur 1 zeigt eine schematische Darstellung einer bevorzugten Ausführungsform eines Sicherheitselements 101 in Form einer Chipkarte in Kommunikation mit einem Hintergrundsystem, insbesondere einem Server 111, die Teil ein Kommunikationssystem 100 ausbilden. Neben dem Server 111 kann das Hintergrundsystem weitere Komponenten, insbesondere Server und/oder Terminals, aufweisen, auf denen zusätzlich zum Server 111 einige der nachstehend beschriebenen Funktionalitäten bereitgestellt werden können. Vorzugsweise handelt es sich bei dem Sicherheitselement 101 um ein elektronisches Sicherheitsdokument, wie beispielsweise einen elektronischen Personalausweis, ein elektronischen Reisepass, eine Signaturkarte oder dergleichen. Bei dem Sicherheitselement 101 kann es sich jedoch ebenfalls um eine Chipkarte zum Durchführen von bargeldlosen Transaktionen handeln, beispielsweise eine EC-Karte oder eine Kreditkarte, oder auch um eine Sim-Karte oder ein SIM-Modul, die einsteckbar oder fest verdrahtet mit einem Mobilfunkendgerät verbunden sind und zur Identifizierung des Mobilfunkteilnehmers dienen.

Die in Figur 1 dargestellte Chipkarte 101 ist dazu ausgestaltet mit dem Server 111 Daten auszutauschen. Als ein Austausch von Daten wird hier eine Signalübertragung, eine wechselseitige Steuerung und in einfachen Fällen auch eine Verbindung zwischen dem Server 111 und der Chipkarte 101 verstanden. In der Informationstheorie wird ein Datenaustausch insbesondere durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Daten dekodieren kann.

Zur Kommunikation zwischen der Chipkarte 101 und dem Server 111 des Hintergrundsystems weisen sowohl die Chipkarte 101 als auch der Server 111 geeignete Kommunikationsschnittstellen 105 und 113 auf. Die Schnittstellen 105 und 113 können beispielsweise so ausgestaltet sein, dass die Kommunikation zwischen diesen bzw. zwischen der Chipkarte 101 und dem Server 111 zumindest teilweise kontaktlos, d.h. über die Luftschnittstelle erfolgt, beispielsweise über eine RF- oder NFC-Schnittstelle. In diesem Fall kann die Schnittstelle 105 der Chipkarte 101 eine geeignet ausgebildete Antennenstruktur aufweisen und die Schnittstelle 113 des Servers bzw. des Hintergrundsystems 111 kann ein Lesegerät umfassen. In weiteren Ausführungsformen kann die Chipkarte 101 über die Schnittstelle 105 galvanisch, d.h. kontaktbehaftet, mit der Schnittstelle 113 des Servers bzw. des Hintergrundsystems 111 verbunden werden. In diesem Fall umfasst die Schnittstelle 105 in der Regel ein auf einer Seite der Chipkarte 101 angeordnetes Kontaktfeld mit Kontaktflächen zum Datenaustausch mit dem Server 111 und die Schnittstelle 113 des Servers bzw. des Hintergrundsystems 111 einen Kartenleser. Selbstverständlich werden von der vorliegenden Erfindung auch Sicherheitselemente in Form von Chipkarten umfasst, die sowohl eine Schnittstelle zur kontaktbehafteten als auch eine Schnittstelle zur kontaktlosen Kommunikation aufweisen und die als Dual-Interface-Chipkarten bekannt sind.

Bei der in Figur 1 dargestellten Ausführungsform umfasst die Chipkarte 101 neben der Schnittstelle 105 zur Kommunikation mit dem Server bzw. dem Hintergrundsystem 111 einen Prozessor 103, der in Kommunikationsverbindung mit der Schnittstelle 105 steht. Bekanntermaßen gehören zu den primären Aufgaben des Prozessors 103 das Ausführen von arithmetischen und logischen Funktionen und das Lesen und Schreiben von Daten, wie dies durch eine auf dem Prozessor 103 ablaufende Softwareapplikation definiert wird. Der Prozessor 103 kann ferner mit einem flüchtigen Arbeitsspeicher (RAM) 109 und einem nichtflüchtigen wieder beschreibbaren Speicher 107 (in Figur 1 als "NVM" (nonvolatile memory) bezeichnet) in Verbindung stehen. In Ausführungsformen der Erfindung kann es sich bei dem nichtflüchtigen Speicher 107 um einen Flash-Speicher (Flash-EEPROM) handeln, beispielsweise um einen Flash-Speicher mit einer NAND- oder einer NOR-Architektur. Neben einem wieder beschreibbaren Teil kann der nichtflüchtige Speicher 107 ferner einen ROM aufweisen (in Figur 1 nicht dargestellt).

Selbstverständlich kann in Ausführungsformen der Erfindung die Chipkarte 101 noch weitere Bauteile bzw. Funktionsblöcke aufweisen, die in Figur 1 nicht dargestellt sind, wie beispielsweise einen Krypto-Coprozessor, der als dediziertes Hardwarebauteil den Prozessor 103 bei der Durchführung kryptographischer Operationen unterstützen kann.

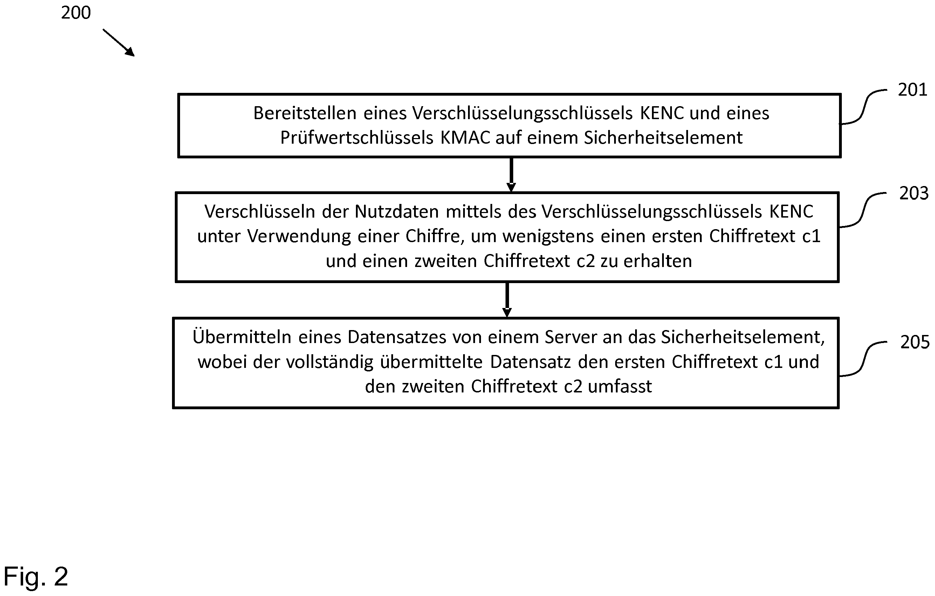

Der nichtflüchtige Speicher 107 der Chipkarte 101 kann ausgebildet sein, dass in diesem Programmcode gespeichert ist, der von dem Prozessor 103 ausgeführt werden kann. Beispielsweise können in dem nichtflüchtigen Speicher ein Betriebssystem, Applikationen und dergleichen gespeichert sein. Insbesondere kann in dem nichtflüchtigen Speicher 107 der Chipkarte 101 Programmcode implementiert sein, durch den die Chipkarte 101 dazu ausgestaltet ist, einen verschlüsselte Nutzdaten umfassenden Datensatz 120, welcher der Chipkarte 101 von dem Server bzw. dem Hintergrundsystem 111 übermittelt wird, so zu verarbeiten, wie dies nachstehend im Zusammenhang mit den weiteren Figuren 2 bis 4 im Detail beschrieben wird. Bei den verschlüsselten Nutzdaten des Datensatzes 120, der gemäß Ausführungsformen der Erfindung, aus mehreren Nachrichtenblöcken bestehen kann, kann es sich beispielsweise um ein Softwareupdate für die Chipkarte 101, insbesondere für deren Betriebssystem, handeln.

Figur 2 zeigt ein Verfahren 200 zum sicheren Übermitteln von Nutzdaten von dem Hintergrundsystem, insbesondere Server, 111 an das Sicherheitselement 101 gemäß einer Ausführungsform.

Das Verfahren 200 umfasst das Bereitstellen 201 eines Verschlüsselungsschlüssels K_{ENC} und eines Prüfwertschlüssels K_{MAC} auf dem Sicherheitselement 101. Bei dem Prüfwertschlüssels K_{MAC} kann es sich insbesondere um einen Schlüssel zum Erstellen eines MAC (Message Authentication Code) handeln.

Das Verfahren 200 umfasst ferner das Verschlüsseln 203 der Nutzdaten mittels des Verschlüsselungsschlüssels K_{ENC} unter Verwendung einer Chiffre, um wenigstens einen ersten Chiffretext c₁ und einen zweiten Chiffretext c₂ zu generieren.

Wie dies nachstehend im Detail beschrieben wird, kann es sich bei der Chiffre, die zum Verschlüsseln (sowie zum Entschlüsseln) der Nutzdaten mittels des Verschlüsselungsschlüssels K_{ENC} verwendet wird, gemäß Ausführungsformen der Erfindung um eine Blockchiffre und/oder eine Stromchiffre handeln. Bei der Verwendung einer Blockchiffre handelt es sich bei dem ersten Chiffretext c₁ und dem zweiten Chiffretext c₂ um einen ersten Chiffreblock c₁ und einen zweiten Chiffreblock c₂.

Das Verfahren umfasst ferner das Übermitteln 205 eines Datensatzes 120 an das Sicherheitselement 101, wobei der vollständig übermittelte Datensatz 120 den ersten Chiffretext c₁ umfasst, den zweiten Chiffretext c₂, einen Prüfwert des ersten Chiffretextes h(c₁), einen Prüfwert des zweiten Chiffretextes h(c₂), einen Prüfwert eines ersten schlüsselbasierten Prüfwerts h(MAC₁), wobei in den ersten schlüsselbasierten Prüfwert MAC₁ der Prüfwert des ersten Chiffretextes h(c₁) eingeht, einen Prüfwert eines zweiten schlüsselbasierten Prüfwerts h(MAC₂), wobei in den zweiten schlüsselbasierten Prüfwert MAC₂ der erste schlüsselbasierte Prüfwert MAC₁ und der Prüfwert des zweiten Chiffretextes h(c₂) eingehen, sowie eine Signatur über den Prüfwert des ersten Chiffretextes und den Prüfwert des ersten schlüsselbasierten Prüfwerts Sign₁[h(c₁)∥h(MAC₁)].

Wie dies nachstehend im Detail beschrieben wird, kann es sich bei den Prüfwerten insbesondere um Hashwert und bei den schlüsselbasierten Prüfwerten um MACs handeln.

Weitere Ausführungsformen des Verfahrens 200, des Sicherheitselements 101 und des Hintergrundsystems, insbesondere Servers, 111 werden nachstehend beschrieben.

Auf Seiten des Sicherheitselements in Form der Chipkarte 101 wird ein asymmetrisches Schlüsselpaar mit einem öffentlichen Schlüssel PB und einem privaten Schlüssel dB generiert, das für die Ableitung von im weiteren Verfahren genutzten symmetrischen Schlüsseln dient. Auf dem Hintergrundsystem, insbesondere Server, 111 werden zwei asymmetrische Signaturschlüsselpaare mit öffentlichen Schlüsseln PSA1 und PSA2 und jeweils zugehörigen privaten Schlüsseln dSA1 und dSA2 generiert. Der private Schlüssel dB sowie die öffentlichen Signaturschlüssel PSA1 und PSA2 werden auf der Chipkarte 101 gegen Manipulation und Zugriff geschützt gespeichert, beispielsweise im Flash-Speicher 107 der Chipkarte 101. Diese Schritte können im Rahmen einer Personalisierung der Chipkarte 101 beim Hersteller der Chipkarte 101 durchgeführt werden.

Gemäß Ausführungsformen der Erfindung können die vorstehend beschriebenen Schlüsselpaare beispielsweise mittels elliptischer Kurven generiert werden, d.h. bei den Schlüsselpaaren dB, PB und dA, PA kann es sich um EC-Schlüsselpaare handeln. Dabei gilt für PA := dA*G und für PB := dB*G, wobei G den Basispunkt bezeichnet, der aus der x-Koordinate Gx und der y-Koordinate Gy der elliptischen Kurve E(F(p)) besteht. Die elliptische Kurve ist definiert durch die öffentlichen/nicht-öffentlichen Systemparameter, nämlich p, a, b, Gx, Gy, n und den Kofaktor h. Die skalare Multiplikation in der durch E() implizierten Gruppe wird mit * bezeichnet. Die Verkettung (im engl. concatenation) wird mit || dargestellt.

Befindet sich die Chipkarte 101 im Einsatz und ergibt es sich, dass ein Update des auf der Chipkarte 101 implementierten Betriebssystems erforderlich ist, wird gemäß Ausführungsformen der Erfindung wie folgt vorgegangen.

Zunächst wird vom Hintergrundsystem, insbesondere Server, 111 ein ephemerales Schlüsselpaar mit öffentlichem Schlüssel PA und privatem Schlüssel dA erzeugt. Ferner können die Nutzdaten in eine Sequenz von n Datenblöcken Data₁ bis Dataₙ zerteilt werden. Mit Hilfe des privaten Schlüssels des ephemeralen Schlüsselpaars dA und des öffentlichen Schlüssels PB wird vom Hintergrundsystem, insbesondere Server, 111 unter Verwendung einer Schlüsselvereinbarungsfunktion KA(x) ein Geheimnis berechnet, um mittels einer Schlüsselableitungsfunktion KDF(x) aus diesem Geheimnis einen Verschlüsselungsschlüssel K_{ENC}, einen Schlüssel zur Erzeugung von Nachrichtenauthentifizierungscodes K_{MAC} sowie Initialisierungsparameter IV_{ENC} und IV_{MAC} abzuleiten. Mit einem symmetrischen Verschlüsselungsverfahren und dem Verschlüsselungsschlüssel K_{ENC} werden aus den n Datenblöcken dann n Chiffretexte c₁ bis cₙ erzeugt.

KA(x) bezeichnet eine Funktion zur Schlüsselvereinbarung (Key Agreement), die unter Verwendung eines privaten Schlüssels aus einer Bytefolge x eine neue Bytefolge berechnet, die ein gemeinsames Geheimnis darstellt, dass der Inhaber des privaten Schlüssels mit einem Partner teilt. Damit der Partner ebenfalls die identische Bytefolge berechnen kann, muss dem Partner neben der Bytefolge x ein zusätzlicher Parameter zur Verfügung stehen, der ihm die Berechnung des identischen Werts des Geheimnisses ermöglicht (beispielsweise der öffentliche Schlüssel des asymmetrischen Schlüsselpaars). Erforderliche Eigenschaften von KA(x) sind, dass es praktisch unmöglich sein muss, dass (i) durch Kenntnis der Bytefolge x und des öffentlichen Schlüssels auf den verwendeten privaten Schlüssel geschlossen werden kann und (ii) durch Kenntnis der Bytefolge x und des öffentlichen Schlüssels auf den Wert des resultierenden Geheimnisses geschlossen werden kann. Gebräuchliche Schlüsselvereinbarungsprotokolle, beispielsweise das Diffie-Hellman-Schlüsselvereinbarungsprotokoll oder ECKA, erfüllen bei geeigneter Implementierung diese kryptographischen Eigenschaften und sind somit für die Verwendung in Ausführungsformen der Erfindung geeignet. Gemäß Ausführungsformen der Erfindung kann die Funktion zur Schlüsselvereinbarung durch eine Software-Implementierung realisiert werden, die auf dedizierte Hardware-Komponenten zurückgreifen kann, um die notwendigen mathematischen Basis-Operationen für Langzahlarithmetik, beispielsweise modulare Langzahlmultiplikationen in Primkörpern, durch Hardwarekomponenten ausführen lassen zu können.

KDF(x) bezeichnet eine Funktion zur Schlüsselableitung (Key Derivation), die unter Verwendung der Bytefolge x eine beliebig lange Bytefolge generiert. Gemäß Ausführungsformen der Erfindung können aus dieser Bytefolge die Schlüssel K_{ENC} und K_{MAC} sowie die Initialisierungsvektoren IV_{ENC} und IV_{MAC} für die Funktionen ENOP_{K}(x) und MAC_{K}(x) abgeleitet werden. Erforderliche Eigenschaften einer erfindungsgemäß geeigneten Schlüsselableitungsfunktion sind, dass (i) es praktisch unmöglich sein muss, die generierte Bytefolge im Rahmen eines "Brute Force"-Angriffes nachzubilden, und (ii) eine deterministische Abbildung der Bytefolge erfolgt. Gebräuchliche Schlüsselableitungsfunktionen, beispielsweise auf SHAx basierende oder auf AES basierende Schlüsselableitungsfunktionen, erfüllen bei geeigneter Implementierung diese kryptographischen Eigenschaften und sind somit für die Verwendung in Ausführungsformen der Erfindung geeignet. Gemäß Ausführungsformen der Erfindung kann die Funktion zur Schlüsselableitung durch eine Software-Implementierung realisiert werden, die auf dedizierte Hardware-Komponenten zurückgreifen kann, um die notwendigen mathematischen Basis-Operationen, z.B. AES, durch Hardwarekomponenten ausführen lassen zu können.

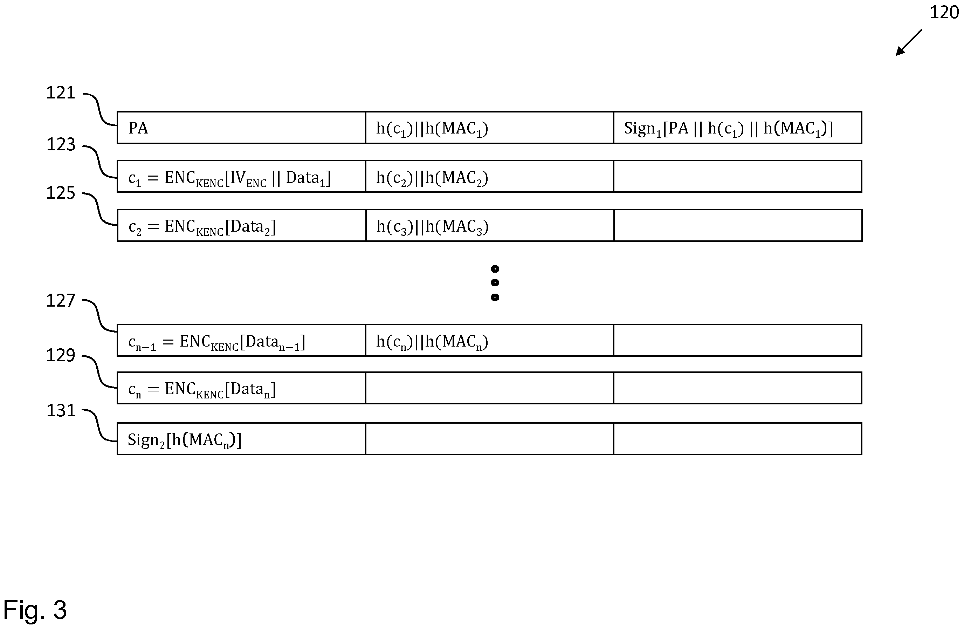

Anschließend wird die in Figur 1 dargestellte Sequenz von Nachrichten 120, die hier auch als Datensatz 120 bezeichnet wird, vom Hintergrundsystem, insbesondere Server, 111 wie folgt erzeugt, wie dies im Detail in Figur 3 im Rahmen einer Ausführungsform dargestellt ist. Die erste Nachricht 121 des Datensatzes 120 besteht aus dem öffentlichen ephemeren Schlüssel PA, einem kryptografischen Hashwert des ersten Chiffretexts h(c₁) mit c₁ = ENC(K_{ENC}, IV_{ENC} II Data₁), einem Hashwert eines ersten Nachrichtenauthentifizierungscodes h(MAC₁) mit MAC₁ = MAC(K_{MAC}, IV_{MAC} ∥ c₁) des ersten Chiffretexts, der mit dem Schlüssel K_{MAC} erzeugt wird, sowie einer mit dem privaten Signaturschlüssel dSA1 erzeugten Signatur Sign₁ über den öffentlichen ephemeren Schlüssel PA, den kryptografischen Hashwert des ersten Chiffretexts h(c₁) sowie den Hashwert h(MAC₁).

Die zweite bis hin zur einschließlich vorvorletzten Nachricht 123-129 bestehen aus Tripeln von einem Chiffretext cᵢ mit i = 1 ... n-1, einem Hashwert des darauffolgenden Chiffretexts h(Cᵢ₊ᵢ) sowie einem Hashwert eines MACs bzw. Nachrichtenauthentifizierungscodes, der über den MAC bzw. Nachrichtenauthentifizierungscode des aktuellen Chiffretexts cᵢ sowie den Hashwert des darauffolgenden Chiffretexts berechnet wird, d.h. h(MAC(K_{MAC}, MACᵢ ∥ h(cᵢ₊₁)).

Die vorletzte Nachricht 129 besteht aus dem Chiffretext cₙ.

Die letzte Nachricht 131 besteht aus einer mit dem privaten Signaturschlüssel dSA2 erzeugten Signatur des Hashwerts des MAC bzw. Nachrichtenauthentifizierungscode über den letzten Chiffretext cₙ, also h(MACₙ).

ENC(K, x) bzw. ENC_{K}(x) bezeichnet eine Verschlüsselungsfunktion, die eine Bytefolge x mit Hilfe eines Verschlüsselungsalgorithmus und eines symmetrischen Schlüssels K in ein Kryptogramm (Ciphertext oder Chiffretext) transformiert. Gemäß bevorzugter Ausführungsformen der Erfindung handelt es sich dabei um eine Stromchiffre auf Basis eines Blockverschlüsselungsalgorithmus, beispielsweise AES-128. Gemäß Ausführungsformen der Erfindung kann die Blockverschlüsselung durch eine dedizierte Hardwarekomponente realisiert werden, beispielsweise durch einen Krypto-Coprozessor.

h(x) bezeichnet eine kryptografische Hashfunktion, die eine Bytefolge x von (theoretisch) beliebiger Länge auf einen Bytefolge definierter Länge, d.h. den Hashwert, abbildet. Erforderliche Eigenschaften einer für Ausführungsformen der Erfindung geeignete Hashfunktion sind, dass es praktisch unmöglich sein muss, (i) durch Kenntnis des Hashwerts auf die Bytefolge x zu schließen und (ii) zu dem Hashwert einer Bytefolge x eine zweite Bytefolge x' zu finden, die einen identischen Hashwert liefert. Gebräuchliche Hashalgorithmen (z. B. Algorithmen der Hashfamilien SHA2 oder SHA3) erfüllen bei richtiger Implementierung diese kryptographischen Eigenschaften und sind somit für die Verwendung in Ausführungsformen der Erfindung geeignet. Gemäß Ausführungsformen der Erfindung kann die Hashfunktion durch eine entsprechende Software-Implementierung oder alternativ durch eine dedizierte Hardwarekomponente realisiert werden.

MAC(K, x) bzw. MAC_{K}(x) bezeichnet eine Funktion, die zu einer Bytefolge x (von theoretisch beliebiger Länge) mit Hilfe eines geheimen Schlüssels K einen Message-Authentication-Code (MAC) definierter Länge berechnet, der auch als schlüsselbasierter Hashwert bezeichnet wird. Erforderliche Eigenschaften einer MAC-Funktion sind, dass es praktisch unmöglich sein muss, (i) durch Kenntnis des MAC auf den verwendeten Schlüssel zu schließen, (ii) zu einem Message-Authentication-Code einer Bytefolge x eine zweite Bytefolge x' zu finden, die einen identischen Message-Authentication-Code liefert, und (iii) ohne Kenntnis des Schlüssels K zu einer Bytefolge den korrekten Message-Authentication-Code zu berechnen. Gebräuchliche MAC-Algorithmen, vorzugsweise auf Basis von Blockverschlüsselungsalgorithmen, beispielsweise AES-CBC oder AES-CMAC, oder Hashalgorithmen, beispielsweise HMAC, erfüllen bei geeigneter Implementierung diese kryptographischen Eigenschaften und sind somit für die Verwendung in Ausführungsformen der Erfindung geeignet. Gemäß Ausführungsformen der Erfindung kann die Blockverschlüsselung und somit die MAC-Berechnung durch eine dedizierte Hardwarekomponente realisiert werden.

Sign(x) bezeichnet eine Signaturfunktion, die zu einer Bytefolge x mit Hilfe des privaten Schlüssels dSA1 oder dSA2 eines asymmetrischen Schlüsselpaars eine kryptographische Signatur berechnet. Die Korrektheit der Signatur kann mit Hilfe des öffentlichen Schlüssels PSA1 bzw. PSA2 des asymmetrischen Schlüsselpaars verifiziert werden. Erforderliche Eigenschaften einer Signaturfunktion sind, dass es praktisch unmöglich sein muss, (i) durch Kenntnis der Bytefolge x und der Signatur auf den verwendeten privaten Schlüssel dSA1 oder dSA2 zu schließen, (ii) durch Kenntnis des öffentlichen Verifikationsschlüssels PSA1 oder PSA2 auf den verwendeten privaten Schlüssel dSA1 bzw. dSA2 zu schließen, (iii) zu der Signatur einer Bytefolge x eine zweite Bytefolge x' zu finden, die eine identische Signatur liefert, und (iv) ohne Kenntnis des privaten Schlüssels dSA1 oder dSA2 zu einer Bytefolge x die korrekte Signatur zu berechnen. Gebräuchliche Signatur-Algorithmen, beispielsweise RSA oder ECDSA, erfüllen bei richtiger Implementierung diese kryptographischen Eigenschaften und sind somit für die Verwendung in Ausführungsformen der Erfindung geeignet. Gemäß Ausführungsformen der Erfindung kann die Signaturfunktion Sign(x) durch eine Software-Implementierung realisiert werden, die auf dedizierte Hardware-Komponenten zurückgreifen kann, um die notwendigen mathematischen Basis-Operationen für Langzahlarithmetik, wie beispielsweise modulare Langzahlmultiplikationen in Primkörpern, durch Hardwarekomponenten ausführen lassen zu können.

Die Nachrichtensequenz 120 wird vom Hintergrundsystem, insbesondere Server, 111 an das Sicherheitselement in Form der Chipkarte 101 übermittelt. Nach dem Erhalt der ersten Nachricht 121 verifiziert die Chipkarte 101 zunächst die Signatur über die übermittelten Daten mit dem gespeicherten öffentlichen Signaturschlüssel PSA1 und fährt nur bei erfolgreicher Signaturprüfung fort. Mit Hilfe des privaten Schlüssels dB sowie des ephemeralen öffentlichen Schlüssels PA wird von der Chipkarte 101 das gemeinsame Geheimnis unter Verwendung einer Schlüsselvereinbarungsfunktion, beispielsweise das Diffie-Hellman-Schlüsselvereinbarungsprotokoll oder ECKA, berechnet und daraus der Verschlüsselungsschlüssel K_{ENC}, der Schlüssel zur Erzeugung von Nachrichtenauthentifizierungscodes K_{MAC}, der Initialisierungsparameter IV_{ENC} und der Initialisierungsparameter IV_{MAC} abgeleitet. Für die zweite bis hin zur vorletzten Nachricht 123-129 prüft die Chipkarte 101 jeweils, ob der in der vorherigen Nachricht übermittelte Hashwert des Nachrichtenauthentifizierungscodes des aktuellen Chiffretexts mit dem berechneten Hashwerts des Nachrichtenauthentifizierungscodes des in der aktuellen Nachricht tatsächlich übermittelten Chiffretexts übereinstimmt. Falls keine Übereinstimmung vorliegt, bricht die Chipkarte 101 den Übermittlungsvorgang ab. Andernfalls entschlüsselt die Chipkarte 101 den Chiffretext mit Hilfe des abgeleiteten Schlüssels K_{ENC} zu dem Datenblock.

In der letzten Nachricht 131 des Datensatzes 120 wird von der Chipkarte 101 die Signatur des Hashwerts des Nachrichtenauthentifizierungscodes über den letzten Chiffretext mit Hilfe des öffentlichen Signaturschlüssels PSA2 verifiziert. Nur wenn die Signatur korrekt verifiziert wurde, werden die entschlüsselten Nutzdaten Data₁ bis Dataₙ weiter verwendet, beispielsweise um Sicherheitsfunktionalitäten des Betriebssystems des Sicherheitselements zu aktualisieren. Andernfalls können diese Daten von der Chipkarte 101 verworfen werden.

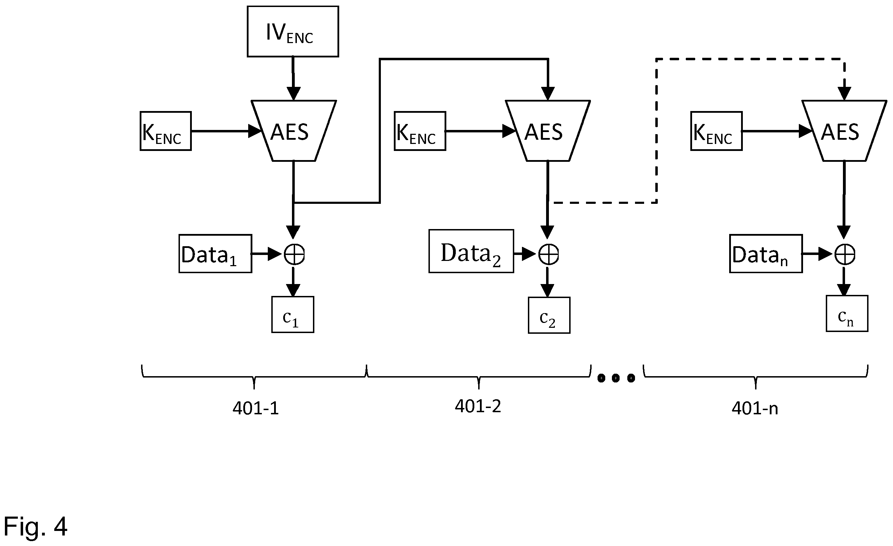

Gemäß bevorzugter Ausführungsformen der Erfindung wird für die Verschlüsselung der Nutzdatenblöcke Dataᵢ der AES (Advanced Encryption Standard) im OFB-Mode verwendet, wie dies schematisch in Figur 4 dargestellt ist, bei der die Nutzdatenblöcke mittels einer XOR-Operation mit einem sich ändernden Schlüssel verknüpft werden. Mit anderen Worten, gemäß Ausführungsformen der Erfindung handelt es sich bei der Chiffre, die zum Verschlüsseln der Nutzdaten mittels des Verschlüsselungsschlüssels K_{ENC} verwendet wird, um eine Stromchiffre, die in einem schlüsselbasierten Teil des Verfahrens einen Schlüsselstrom generiert, mittels dem in einem nicht schlüsselbasierten Teil des Verfahrens der erste Chiffretext (c₁) und der zweite Chiffretext (c₂) generiert werden.

Dadurch wird verhindert, dass eine AES-Einheit Daten verarbeitet, die außerhalb der Chipkarte 101 bekannt sind. Für den Start der Verschlüsselung wird gemäß Ausführungsformen der Erfindung der Initialisierungsparameter IV_{ENC} verwendet (Abschnitt 401-1 in Figur 4). Für alle folgenden Operationen wird der AES-Ciphertextblock, der die Verschlüsselung des letzten Datenblock im vorherigen Kommando verwendet wurde, als Chaining-Block benutzt (Abschnitte 401-2 bis 401-n von Figur 4).

Gemäß Ausführungsformen der Erfindung können die Chiffreblöcke cᵢ folgendermaßen berechnet werden:
c₁ := AES-OFB(K_{ENC}, IV_{ENC} ∥ Data₁)
cᵢ := AES-OFB(K_{ENC}, Dataᵢ); mit i = 2, 3, ..., n,
wobei AES-OFB für den "Advanced Encryption Standard" im "Output Feedback"-Modus steht.

Gemäß Ausführungsformen der Erfindung können die Nachrichtenauthentifizierungscodes MACᵢ folgendermaßen berechnet werden:
MAC₁ := AES-CMAC(K_{MAC}, IV_{MAC} ∥ h(c₁))
MACᵢ := AES-CMAC(K_{MAC}, MACᵢ₋₁ ∥ h(cᵢ)); mit i := 2, 3, ..., n,
wobei AES-CMAC für "Cipher-based Message Authentication Code" unter Verwendung des "Advanced Encryption Standard" steht. Somit kann gemäß Ausführungsformen der Erfindung sowohl für die Verschlüsselung als auch die Berechnung der Nachrichtenauthentifizierungscodes vorteilhafterweise eine AES-Einheit eingesetzt werden.

Gemäß Ausführungsformen der Erfindung können die vorstehend beschriebenen Signaturen auf elliptischen Kurven basieren. Beispielsweise können die Signaturen folgendermaßen berechnet werden:
Sign₁ := ECDSA[dSA1, h(PA.x ∥ h(c₁) ∥ h(MAC₁)]
Sign2 := ECDSA[dSA2, h(MACₙ)],
wobei ECDSA für den "Elliptic Curve Digital Signature Algorithm" steht.

Aus Performancegründen können bei erfindungsgemäßen Ausführungsformen des Sicherheitselements in Form der Chipkarte 101 die vorstehend beschriebenen kryptografischen Ver- und Entschlüsselungsroutinen sowie die vorstehend beschriebenen Routinen zur Berechnung von Nachrichtenauthentifizierungscodes in Hardware realisiert werden, beispielsweise unter Verwendung eines Krypto-Coprozessors. Da für die Berechnung geheimes Schlüsselmaterial (hier: die abgeleiteten Schlüssel K_{ENC} und K_{MAC}) verwendet wird, wird gemäß Ausführungsformen der Erfindung die Nutzbarkeit von solchen Routinen durch einen Angreifer durch Übermittlung von veränderten Daten - insbesondere vor Sicherstellung der Authentizität der übermittelten Daten - minimiert, um so wenig wie möglich physisch oder logisch beobachtbare Phänomene zu erzeugen. Ausführungsformen der Erfindung weisen mehrere Eigenschaften auf, die eine solche Nutzung von Routinen auf ein Mindestmaß beschränken können, wie nachstehend im Detail beschrieben wird.

Gemäß Ausführungsformen der Erfindung erfolgt die Entschlüsselung von Daten ausschließlich nach der Sicherstellung der Authentizität der übermittelten Daten. Technisch geschieht dies bei Ausführungsformen der Erfindung durch die Prüfung der Signatur und des Nachrichtenauthentifizierungscodes in der ersten übermittelten Nachricht 121, bevor der erste Chiffretext c₁ dekodiert wird, der Teil der Nachricht 123 ist. Durch die Verkettung von Nachrichtenauthentifizierungscodes (der Code MACᵢ geht in den Code MACᵢ₊₁ mit ein) ist auch für die Folgeblöcke der weiteren Nachrichten sichergestellt, dass ausschließlich authentifizierte Datenblöcke dekodiert werden. Dies minimiert die Wahrscheinlichkeit, dass ein Angreifer durch das Beobachtens der Chipkarte 101 während eines Entschlüsselungsvorgangs von präparierten Datenblöcken verwertbare physische oder logische Informationen gewinnen kann, solange er nicht im Besitz der geheimen Signaturschlüssel dSA1 und dSA2 ist. Diese sind jedoch nicht auf der Chipkarte 101, sondern auf dem Hintergrundsystem, insbesondere, Server 111 gespeichert. Durch zusätzliche Geheimhaltung der Systemparameter, die im Rahmen des Signaturverfahrens zum Einsatz kommen, wie beispielsweise Parameter einer für das Signaturverfahren verwendeten elliptischen Kurve, werden mathematische Angriffe auf das verwendete asymmetrische Kryptoverfahren ausgeschlossen, so dass die Berechnung von dSA1 bzw. dSA2 aus PSA1 bzw. PSA2 nicht möglich ist. Da die Systemparameter ausschließlich dem Hersteller bzw. dem Erzeuger der Nutzdaten bekannt sein müssen, ist eine Verteilung nicht notwendig. Weiterhin können auf der Chipkarte 101 mehrere Sätze von Systemparametern vorhanden sein, und für unterschiedliche Updates verwendet werden. Die Referenz des zu verwenden Systemparametersatzes kann in diesem Fall Teil des öffentlichen Schlüssels PSA1 bzw. PSA2 sein.

Gemäß Ausführungsformen der Erfindung dienen Hashwerte der Chiffreblöcke als Eingabe zur Berechnung der Nachrichtenauthentifizierungscodes. Kryptografische Hashfunktionen bilden die - potentiell großen - Chiffreblöcke auf eine Zeichenfolge mit fester, geringer Länge ab. Die Berechnung des Nachrichtenauthentifizierungscodes erfolgt nur auf dieser kurzen Zeichenfolge. Dadurch wird die Nutzung der Routine für die Berechnung des Nachrichtenauthentifizierungscodes auf ein Mindestmaß beschränkt, so dass nur für einen geringen Zeitraum beobachtbare Phänomene entstehen können.

Gemäß Ausführungsformen der Erfindung geht in die Berechnung der Nachrichtenauthentifizierungscodes der geheime Schlüssel K_{MAC} ein. Um zu vermeiden, dass ein Angreifer anhand der Kenntnis von mehreren Nachrichtenauthentifizierungscodes Rückschlüsse auf den geheimen Schlüssel K_{MAC}, die Parameter zur Erzeugung des geheimen Schlüssels bzw. des zugrundeliegenden gemeinsamen berechneten Geheimnisses ziehen kann, besitzt das Verfahren gemäß Ausführungsformen der Erfindung die Eigenschaft, dass Hashwerte der Nachrichtenauthentifizierungscodes als Teil der Nachrichten des Datensatzes 120 übertragen werden. Durch das asymmetrische Verfahren der Ableitung des gemeinsamen und damit des geheimen Schlüssels K_{MAC} kann die Berechnung des Nachrichtenauthentifizierungscodes ausschließlich auf der Chipkarte 101 erfolgen. Somit ist die Übermittlung der Nachrichtenauthentifizierungscodes zur Chipkarte 101 nicht notwendig; die Übermittlung der kryptografischen Hashwerte reicht aus. Ein Angreifer besitzt daher selbst bei Erlangung der Kenntnis der Nachrichtensequenz keine Kenntnis über die Nachrichtenauthentifizierungscodes.

Um zu vermeiden, dass ein Angreifer anhand der Kenntnis von mehreren Nutzdatenblöcken Rückschlüsse auf den geheimen Schlüssel K_{MAC} und/oder die Parameter zur Erzeugung des geheimen Schlüssels bzw. des zugrundeliegenden gemeinsamen berechneten Geheimnisses ziehen kann, besitzt das Verfahren gemäß Ausführungsformen der Erfindung die Eigenschaft, dass ein unbekannter Datenblock für die Berechnung des Nachrichtenauthentifizierungscodes vorangestellt wird. Denn gemäß Ausführungsformen der Erfindung wird den Eingabedaten zur Berechnung des Nachrichtenauthentifizierungscodes MACᵢ₊₁ der außerhalb der Chipkarte 101 unbekannte Nachrichtenauthentisierungscode MACᵢ vorangestellt. Alle weiteren Datenblöcke werden bei geeigneter Wahl der für die Verknüpfungsfunktion (z.B. CBC-Mode) mit dem Zwischenergebnis des jeweils vorhergehenden Datenblocks verknüpft. Für den ersten Nachrichtenauthentisierungscode wird der Wert IV_{MAC} vorangestellt, der zusammen mit dem Schlüssel K_{MAC} aus dem gemeinsamen Geheimnis berechnet werden kann.

Gemäß Ausführungsformen der Erfindung geht in die Berechnung der Nachrichtenblöcke der geheime Schlüssel K_{ENC} ein. Um zu vermeiden, dass ein Angreifer anhand der Kenntnis von mehreren Chiffreblöcken Rückschlüsse auf den geheimen Schlüssel K_{ENC} und/oder die Parameter zur Erzeugung des geheimen Schlüssels bzw. des zugrundliegenden gemeinsamen berechneten Geheimnis ziehen kann, besitzt das Verfahren gemäß Ausführungsformen der Erfindung die Eigenschaft, dass ein schlüsselbasiertes Verfahren zur Erzeugung der Chiffreblöcke in den Nachrichten vermieden werden kann. Durch das asymmetrische Verfahren der Ableitung des gemeinsamen Geheimnisses und damit des geheimen Schlüssels K_{ENC} kann das Entschlüsselungsverfahren ausschließlich in der sicheren Umgebung der Chipkarte 101 durchgeführt werden. Gemäß Ausführungsformen der Erfindung ist das Entschlüsselungsverfahren so gewählt, dass es aus einem schlüsselbasierten und einem nicht-schlüsselbasierten Teil zusammengesetzt ist, wobei der extern bekannte Chiffretext nur durch den nicht-schlüsselbasierten Teil des Verfahrens unmittelbar verarbeitet wird. Diese Ausgestaltung kann sicher stellen, dass ein Angreifer zur Analyse von physisch oder logisch beobachtbaren Phänomenen, die mit dem Schlüssel K_{ENC} korrelieren, keine außerhalb der Chipkarte 101 bekannten Daten verwenden kann.

Es besteht die Gefahr, dass ein Angreifer in den Besitz einer Chipkarte 101 gelangt und diese nutzen kann, um den beispielsweise im Flash-Speicher 107 hinterlegten privaten Schlüssel dB, z.B. durch physisch oder logisch beobachtbare Phänomene, auszulesen. Bei Kenntnis der Schlüssels dB kann der Angreifer die Schlüssel K_{ENC} und K_{MAC} ableiten und damit beliebige Daten verschlüsseln und Nachrichtenauthentifizierungscodes fälschen. Durch die folgende Eigenschaft von Ausführungsformen der Erfindung kann der Angreifer dann aber trotzdem keine gefälschten Nutzdaten einspielen. Angenommen, ein Angreifer ersetzt an beliebiger Stelle den Chiffretext cᵢ durch einen gefälschten Chiffretext cᵢ'. Damit der gefälschte Chiffretext cᵢ' von der Chipkarte 101 als authentisch anerkannt wird, muss gemäß Ausführungsformen der Erfindung auch der zugehörige Nachrichtenauthentifizierungscode MACᵢ = MAC(K_{MAC}, MACᵢ₋₁ ∥ h(cᵢ)) korrekt sein. Gemäß Ausführungsformen der Erfindung dient der berechnete Wert MACᵢ jedoch wiederum als Eingabe für den darauffolgenden Nachrichtenauthentifizierungscode MACᵢ₊₁, so dass auch dieser Nachrichtenauthentifizierungscode vom Angreifer neu erstellt werden muss, bis hin zum letzten Nachrichtenauthentifizierungscode. Dieser jedoch ist mit einer Signatur versehen, so dass die Chipkarte 101 spätestens an dieser Stelle erkennt, dass der Chiffretext cᵢ durch einen gefälschten Chiffretext cᵢ' ersetzt worden ist.

Gemäß Ausführungsformen der Erfindung ist die Vertraulichkeit der Nutzdaten nach Erstellung der Nachrichtensequenz 120 durchgängig gegeben. Dies wird dadurch sichergestellt, dass gemäß Ausführungsformen der Erfindung die Nutzdaten mit Hilfe eines abgeleiteten symmetrischen Schlüssels K_{ENC} verschlüsselt werden. Ein Angreifer kann nur mit Kenntnis des geheimen Schlüssels dB (der gegen Zugriff geschützt auf der Chipkarte 101 gespeichert ist) oder Kenntnis des geheimen Schlüssels dA (durch den Ersteller der Nachrichtensequenz 120 geheim gehalten) die verschlüsselten Nutzdaten wieder entschlüsseln. Die für das Schlüsselvereinbarungsverfahren notwendigen Systemparameter (z.B. bei Verwendung von elliptischen Kurven die Kurvenparameter) können zusätzlich geheim gehalten werden. Insbesondere eine Extraktion des geheimen Schlüssels dB mit Hilfe von physisch oder logisch beobachtbaren Phänomenen wird durch einen unbekannten Systemparametersatz signifikant erschwert, da die notwendigen mathematischen Analysen die Kenntnis von Systemparametern voraussetzt. Darüber hinaus ist selbst bei erfolgreicher Extraktion von dB ohne Kenntnis der Systemparameter die Berechnung des gemeinsamen Geheimnisses und in Folge die Berechnung von K_{ENC} und K_{MAC} nicht möglich. Weiterhin werden mathematische Angriffe auf das verwendete asymmetrische Kryptoverfahren ausgeschlossen, so dass die Berechnung von dA aus PA nicht möglich ist. Da die Systemparameter ausschließlich dem Hersteller der Chipkarte 101 bzw. dem Bereitsteller der Nutzdaten bekannt sein müssen, ist eine Verteilung nicht notwendig. Weiterhin können gemäß Ausführungsformen der Erfindung auf der Chipkarte 101 mehrere Sätze von Systemparametern hinterlegt sein und für das mehrmalige Einspielen von Nutzdaten verwendet werden. Gemäß Ausführungsformen der Erfindung kann in diesem Fall ein Identifier, der den zu verwendenden Systemparametersatz identifiziert, beispielsweise Teil des öffentlichen Schlüssels PA sein.

Ausführungsformen der Erfindung weisen durch die Art der Sicherstellung der Vertraulichkeit der Nutzdaten darüber hinaus die folgende Eigenschaft auf. Da die Vertraulichkeit der Nutzdaten auch bei Kenntnis der Nachrichtensequenz 120 gegeben ist, können die Nutzdaten auch ohne Kenntnis geheimer Schlüssel durch Dritte genutzt, beispielsweise installiert werden.

Ausführungsformen der Erfindung können vorteilhaft bei Sicherheitselementen eingesetzt werden, die nicht über genügend Speicherkapazität verfügen, um den gesamten Chiffretext als Ganzes zu speichern und auf dem Sicherheitselement zu entschlüsseln. Ferner können Ausführungsformen der Erfindung bei Sicherheitselementen zum Einsatz kommen, bei denen es nicht möglich ist, gleichzeitig Code von bestimmten Speicherbereichen auszuführen (Authentizitätsprüfung, Entschlüsselung) und gleichzeitig Daten von diesem Speicherbereich zu lesen oder dort zu schreiben. Insbesondere die Unterteilung des Datensatzes 120 in mehrere Nachrichten bzw. Nachrichtenblöcke gemäß Ausführungsformen der Erfindung ermöglicht eine Nutzung auf Sicherheitselementen mit beschränkten Ressourcen. Dies ermöglicht es, für jeden Nachrichtenblock zuerst die Authentizität des Chiffretexts des Nachrichtenblocks zu prüfen und nach der Prüfung die Nutzdaten zu entschlüsseln und in einem Speicher des Sicherheitselements in Form der Chipkarte 101 abzulegen. Gemäß Ausführungsformen der Erfindung besteht somit keine Notwendigkeit, den gesamten Chiffretext als Ganzes im Speicher 107 der Chipkarte 101 abzulegen. Durch die wählbare geringe Größe der einzelnen kleineren Chiffreblöcke können Authentizitätsprüfung und Entschlüsselung im wahlfreien Speicher ausgeführt werden.

Ausführungsformen der Erfindung benötigen maximal zwei Signaturprüfungen, nämlich der Signatur im ersten Nachrichtenblock 121 und der Signatur im letzten Nachrichtenblock 131, und sind somit hoch performant, was insbesondere bei Sicherheitselementen mit geringer Rechenkapazität vorteilhaft ist.

Ausführungsformen der Erfindung berücksichtigen die möglicherweise beschränkte Kommunikationskapazität von Sicherheitselementen, indem größere Datenmengen eines Updatevorgangs auf mehrere Nachrichten verteilt werden. Dabei ist die Granularität, in die die Datenmengen zerlegt werden, beliebig skalierbar und prinzipiell nur von der Kapazität der Kommunikationsschnittstelle des Sicherheitselements abhängig.

Wie bereits vorstehend beschrieben, ist in Figur 3 veranschaulicht, wie gemäß Ausführungsformen der Erfindung die Zerlegung der gesamten Nutzdaten 120 in kleinere Einheiten Data₁, Data₂ ... Dataₙ erfolgen kann. Ausführungsformen der Erfindung stellen sicher, dass für alle Nachrichten der Authentizitätsschutz gewährleistet ist. Dazu werden gemäß Ausführungsformen der Erfindung mit Hilfe einer Schlüsselvereinbarungsfunktion KA(x) in Kombination mit der Schlüsselableitung KDF(x), die für die symmetrische Sicherung ENC_{K}(x)/MAC_{K}(x) der Update-Daten notwendigen Systemparameter K_{ENC}, K_{MAC}, IV_{ENC} und IV_{MAC} ermittelt.

In Figur 3 ist durch die Nachricht 121 dargestellt, dass zunächst die Werte für die KA(x)/KDF(x) in Form von PA sowie die Eingangswerte für die Sign₁(x)-Funktion an die Chipkarte 101 übertragen werden. Die Signatur Sign₁(x) stellt die Integrität und die Authentizität der Eingangswerte sicher. Eine nachträgliche Manipulation von PA, h(c₁) oder h(MAC₁) kann somit zuverlässig erkannt werden. Gemäß Ausführungsformen der Erfindung werden somit zunächst die zuvor genannten Eingangswerte übertragen. Wie Figur 3 weiterhin zeigt, gehen in die Berechnung von MAC_{K}(x) und in die finale Signatur Sign₂(x) die MAC-Werte der vorherigen MAC_{K}(x)-Funktionen ein. Dadurch ist eine kontinuierliche Authentizität und Integrität bis zum letzten Nachrichtenblock 131 sichergestellt.

Im nächsten Schritt erfolgt die Prüfung der Korrektheit der Hash-Werte über die Chiffreblöcke. Die Verwendung von Hash-Werten bei der MAC-Prüfung hat zwei Vorteile. Zum einen muss der MAC-Wert selbst nicht bekannt gemacht werden. Zum anderen steht einem Angreifer durch die MAC-Berechnung über die Hash-Werte nur eine sehr geringe Menge ausnutzbarer Daten zur Verfügung. Bei der Berechnung des MAC wird nicht der Hash-Wert selbst als Eingabe in die MAC-Berechnung verwendet, sondern dem Hash-Wert wird der CMAC oder CBC-MAC der vorangegangenen MAC-Prüfung vorangestellt, wodurch die beiden Blöcke miteinander verkettet bzw. verknüpft werden. Die Verknüpfung, die in Ausführungsformen der Erfindung unter Verwendung des Block-Chaining-Modes erfolgt, führt dazu, dass der Eingabeblock in die schlüsselbasierte Operation (AES-Blockverschlüsselung) der MAC-Berechnung nicht bekannt ist. Nachdem die MAC-Prüfung erfolgreich ausgeführt worden ist, wird durch eine erneute Hash-Wertprüfung die Integrität des Chiffretexts sichergestellt. Nach erfolgreicher Prüfung des Hash-Wertes werden die Chiffreblöcke entschlüsselt. Zur Entschlüsselung der Chiffreblöcke wird gemäß Ausführungsformen der Erfindung eine Blockchiffre und/oder Stromchiffre eingesetzt. Der Schlüsselstrom kann dabei z. B. durch einen Blockalgorithmus im OFB-Mode oder einem Counter-Mode (CTR-Mode) erzeugt werden, so dass keine extern verfügbaren Eingabedaten in die schlüsselbasierte Operation der Entschlüsselung eingehen. Bevor die gesamten verketteten Updatedaten als zulässiges Update des Betriebssystems durch das Sicherheitselement akzeptiert werden, erfolgt die Überprüfung der finalen Signatur.

## Patentansprüche

1. Verfahren (200) zum sicheren Übermitteln von Nutzdaten an ein Sicherheitselement (101), wobei das Verfahren (200) umfasst:
das Bereitstellen (201) eines Verschlüsselungsschlüssels (K_{ENC}) und eines Prüfwertschlüssels (K_{MAC}) auf dem Sicherheitselement (101);
das Verschlüsseln (203) der Nutzdaten mittels des Verschlüsselungsschlüssels (K_{ENC}) unter Verwendung einer Chiffre, um wenigstens einen ersten Chiffretext (c₁) und einen zweiten Chiffretext (c₂) zu generieren;
das Übermitteln (205) eines Datensatzes (120) an das Sicherheitselement (101), wobei der vollständig übermittelte Datensatz (120) den ersten Chiffretext (c₁) umfasst, den zweiten Chiffretext (c₂), einen Prüfwert des ersten Chiffretextes (h(c₁)), einen Prüfwert des zweiten Chiffretextes (h(c₂)), einen Prüfwert eines ersten schlüsselbasierten Prüfwerts (h(MAC₁)), wobei in den ersten schlüsselbasierten Prüfwert (MAC₁) der Prüfwert des ersten Chiffretextes (h(c₁)) eingeht, einen Prüfwert eines zweiten schlüsselbasierten Prüfwerts (h(MAC₂)), wobei in den zweiten schlüsselbasierten Prüfwert(MAC₂) der erste schlüsselbasierte Prüfwert (MAC₁) und der Prüfwert des zweiten Chiffretextes (h(c₂)) eingehen, sowie eine Signatur über den Prüfwert des ersten Chiffretextes und den Prüfwert des ersten schlüsselbasierten Prüfwerts (Sign₁[h(c₁)∥h(MAC₁)]).

2. Verfahren nach Anspruch 1, wobei in den ersten schlüsselbasierten Prüfwert (MAC₁) ferner ein Initialisierungsparameter (IV_{MAC}) eingeht.

3. Verfahren nach Anspruch 1 oder 2, wobei beim Schritt (205) des Übermittelns des Datensatzes (120) an das Sicherheitselement (101) eine erste Nachricht (121), welche den Prüfwert des ersten Chiffretextes (h(c₁)) und den Prüfwert des ersten schlüsselbasierten Prüfwerts (h(MAC₁)) umfasst, und eine zweite Nachricht (123), welche den Prüfwert des zweiten Chiffretextes (h(c₂)) und den Prüfwert des zweiten schlüsselbasierten Prüfwerts (h(MAC₂)) umfasst, an das Sicherheitselement (101) übermittelt werden.

4. Verfahren nach Anspruch 3, wobei die erste Nachricht (121) ferner die Signatur über den Prüfwert des ersten Chiffretextes und den Prüfwert des ersten schlüsselbasierten Prüfwerts Sign₁[h(c₁)∥h(MAC₁)] umfasst.

5. Verfahren nach Anspruch 4, wobei das Verfahren die weiteren Schritte umfasst, dass in Reaktion auf das Übermitteln der ersten Nachricht (121) an das Sicherheitselement (101) die Signatur über den Prüfwert des ersten Chiffretextes (h(c₁)) und den Prüfwert des ersten schlüsselbasierten Prüfwerts (h(MAC₁)) vom Sicherheitselement (101) überprüft wird und, falls die Signatur vom Sicherheitselement (101) nicht verifiziert werden kann, das Sicherheitselement (101) den Vorgang abbricht.

6. Verfahren nach einem der Ansprüche 3 bis 5, wobei die zweite Nachricht (123) ferner den ersten Chiffretext (c₁) umfasst.

7. Verfahren nach einem der vorstehenden Ansprüche, wobei der Datensatz (120) ferner eine Signatur über den Prüfwert des zweiten schlüsselbasierten Prüfwerts Sign₂[h(MAC₂)] umfasst.

8. Verfahren nach Anspruch 7, wobei beim Schritt (205) des Übermittelns des Datensatzes (120) an das Sicherheitselement (101) eine weitere Nachricht (131) an das Sicherheitselement (101) übermittelt wird, welche die Signatur über den Prüfwert des zweiten schlüsselbasierten Prüfwerts Sign₂[h(MAC₂)] umfasst.

9. Verfahren nach einem der vorstehenden Ansprüche, wobei es sich bei dem Prüfwert des ersten Chiffretextes (h(c₁)) um einen Hashwert des ersten Chiffretextes (h(c₁)) und bei dem Prüfwert des zweiten Chiffretextes (h(c₂)) um einen Hashwert des zweiten Chiffretextes (h(c₂)) handelt.

10. Verfahren nach einem der vorstehenden Ansprüche, wobei es sich bei der Chiffre, die zum Verschlüsseln der Nutzdaten mittels des Verschlüsselungsschlüssels (K_{ENC}) verwendet wird, um eine Stromchiffre handelt, die in einem schlüsselbasierten Teil des Verfahrens einen Schlüsselstrom generiert, mittels dem in einem nicht schlüsselbasierten Teil des Verfahrens der erste Chiffretext (c₁) und der zweite Chiffretext (c₂) generiert werden.

11. Verfahren nach Anspruch 10, wobei es sich bei der Chiffre, die zum Verschlüsseln der Nutzdaten mittels des Verschlüsselungsschlüssels (K_{ENC}) verwendet wird, um eine AES-Blockchiffre, insbesondere eine AES-Blockchiffre im OFB-Modus oder CTR-Modus, oder um eine TDES-Blockchiffre handelt.

12. Verfahren nach Anspruch 11, wobei der erste schlüsselbasierte Prüfwert und der zweite schlüsselbasierte Prüfwert ein MAC, insbesondere ein CMAC oder CBC-MAC, sind und unter Verwendung der AES-Blockchiffre oder der TDES-Blockchiffre berechnet werden.

13. Verfahren nach einem der Ansprüche 1 bis 9, wobei zum Verschlüsseln der Nutzdaten mittels des Verschlüsselungsschlüssels (K_{ENC}) und zum Erstellen der schlüsselbasierten Prüfwerte eine AES-Blockchiffre im Galois/CTR-Modus verwendet wird.

14. Verfahren nach einem der vorstehenden Ansprüche, wobei das Bereitstellen (201) des Verschlüsselungsschlüssels (K_{ENC}) und des Prüfwertschlüssels (K_{MAC}) auf dem Sicherheitselement (101) den Schritt des Berechnens eines Geheimnisses und den Schritt des Ableitens des Verschlüsselungsschlüssels (K_{ENC}) und des Prüfwertschlüssels (K_{MAC}) aus dem berechneten Geheimnis umfasst.

15. Verfahren nach Anspruch 14, wobei der Datensatz (120) ferner einen öffentlichen Schlüssel eines ephemeralen Schlüsselpaars (PA) umfasst und der Schritt des Berechnens eines Geheimnisses das Berechnen des Geheimnisses auf der Basis des öffentlichen Schlüssels des ephemeralen Schlüsselpaars (PA) und eines auf dem Sicherheitselement (101) sicher hinterlegten privaten Schlüssels (dB) umfasst.

16. Verfahren nach Anspruch 15, wobei der Datensatz (120) ferner eine Signatur über den öffentlichen Schlüssel des ephemeralen Schlüsselpaars (PA) oder eines Teils davon umfasst.

17. Sicherheitselement (101) mit:
einer Kommunikationsschnittstelle (105), die ausgebildet ist, einen von einem Hintergrundsystem (111) übermittelten Datensatz (120) zu empfangen, wobei der vollständig übermittelte Datensatz (120) einen ersten Chiffretext (c₁) umfasst, einen zweiten Chiffretext (c₂), einen Prüfwert des ersten Chiffretextes (h(c₁)), einen Prüfwert des zweiten Chiffretextes (h(c₂)), einen Prüfwert eines ersten schlüsselbasierten Prüfwerts (h(MAC₁)), wobei in den ersten schlüsselbasierten Prüfwert (MAC₁) der Prüfwert des ersten Chiffretextes (h(c₁)) eingeht, einen Prüfwert eines zweiten schlüsselbasierten Prüfwerts (h(MAC₂)), wobei in den zweiten schlüsselbasierten Prüfwert (MAC₂) der erste schlüsselbasierte Prüfwert (MAC₁) und der Prüfwert des zweiten Chiffretextes (h(c₂)) eingehen, sowie eine Signatur über den Prüfwert des ersten Chiffretextes und den Prüfwert des ersten schlüsselbasierten Prüfwerts (Sign₁[h(c₁)∥h(MAC₁)]); und
einem Prozessor (103), der ausgebildet ist, auf der Basis eines Verschlüsselungsschlüssels (K_{ENC}) und eines Prüfwertschlüssels (K_{MAC}) den Datensatz (120) zu verifizieren und den ersten Chiffretext (c₁) und den zweiten Chiffretext (c₂) zu entschlüsseln.

18. Hintergrundsystem, insbesondere Server, (111) mit:
einem Prozessor, der ausgebildet ist, Nutzdaten mittels eines Verschlüsselungsschlüssels (K_{ENC}) unter Verwendung einer Chiffre zu verschlüsseln, um wenigstens einen ersten Chiffretext (c₁) und einen zweiten Chiffretext (c₂) zu erhalten; und
einer Kommunikationsschnittstelle (113), die ausgebildet ist, einen Datensatz (120) an ein Sicherheitselement (101) zu übermitteln, wobei der vollständig übermittelte Datensatz (120) den ersten Chiffretext (c₁) umfasst, den zweiten Chiffretext (c₂), einen Prüfwert des ersten Chiffretextes (h(c₁)), einen Prüfwert des zweiten Chiffretextes (h(c₂)), einen Prüfwert eines ersten schlüsselbasierten Prüfwerts (h(MAC₁)), wobei in den ersten schlüsselbasierten Prüfwert (MAC₁) der Prüfwert des ersten Chiffretextes (h(c₁)) eingeht, einen Prüfwert eines zweiten schlüsselbasierten Prüfwerts (h(MAC₂)), wobei in den zweiten schlüsselbasierten Prüfwert (MAC₂) der erste schlüsselbasierte Prüfwert (MAC₁) und der Prüfwert des zweiten Chiffretextes (h(c₂)) eingehen, sowie eine Signatur über den Prüfwert des ersten Chiffretextes und den Prüfwert des ersten schlüsselbasierten Prüfwerts (Sign₁[h(c₁)∥h(MAC₁)]).

## Claims

1. A method (200) for the secure transmission of user data to a security element (101), wherein the method (200) comprises:
providing (201) an encryption key (K_{ENC}) and a check value key (K_{MAC}) on the security element (101);
encrypting (203) the user data by means of the encryption key (K_{ENC}) and using a cipher in order to generate at least a first cipher text (c₁) and a second cipher text (c₂);
transmitting (205) a data set (120) to the security element (101), wherein the completely transmitted data set (120) comprises the first cipher text (c₁), the second cipher text (c₂), a check value of the first cipher text (h(c₁)), a check value of the second cipher text (h(c₂)), a check value of a first key-based check value (h(MAC₁)), wherein the check value of the first cipher text (h(c₁)) is included in the first key-based check value (MAC₁), a check value of a second key-based check value (h(MAC₂)), wherein the first key-based check value (MAC₁) and the check value of the second cipher text (h(c₂)) are included in the second key-based check value (MAC₂), as well as a signature of the check value of the first cipher text and the check value of the first key-based check value (Sign₁[h(c₁)∥h(MAC₁)]).

2. The method according to Claim 1, wherein furthermore an initialization parameter (IV_{MAC}) is included in the first key-based check value (MAC₁).

3. The method according to Claim 1 or 2, wherein, in the first step (205) of transmitting the data set (120) to the security element (101), a first message (121), which comprises the check value of the first cipher text (h(c₁)) and the check value of the first key-based check value (h(MAC₁)), and a second message (123), which comprises the check value of the second cipher text (h(c₂)) and the check value of the second key-based check value (h(MAC₂)), are transmitted to the security element (101).

4. The method according to Claim 3, wherein the first message (121) furthermore comprises the signature of the check value of the first cipher text and the check value of the first key-based check value Sign₁[h(c₁)∥h(MAC₁)].

5. The method according to Claim 4, wherein the method comprises the further steps of, in response to transmitting the first message (121) to the security element (101), the signature, of the check value of the first cipher text (h(c₁)) and the check value of the first key-based check value (h(MAC₁)), is verified by the security element (101), and, if the signature cannot be verified by the security element (101), the security element (101) aborts the process.

6. The method according to any one of Claims 3 to 5, wherein the second message (123) furthermore comprises the first cipher text (c₁).

7. The method according to any one of the preceding claims, wherein the data set (120) furthermore comprises a signature of the check value of the second key-based check value Sign₂[h(MAC₂)].

8. The method according to Claim 7, wherein, in step (205) of transmitting the data set (120) to the security element (101), an additional message (131) is transmitted to the security element (101), which comprises the signature of the check value of the second key-based check value Sign₂[h(MAC₂)].

9. The method according to any one of the preceding claims, wherein the check value of the first cipher text (h(c₁)) is a hash value of the first cipher text (h(c₁)), and the check value of the second cipher text (h(c₂)) is a hash value of the second cipher text (h(c₂)).

10. The method according to any one of the preceding claims, wherein the cipher which is used for encrypting the user data by means of the encryption key (K_{ENC}) is a stream cipher which, in a key-based portion of the method, generates a keystream by means of which, in a non-key-based portion of the method, the first cipher text (c₁) and the second cipher text (c₂) are generated.

11. The method according to Claim 10, wherein the cipher which is used for encrypting the user data by means of the encryption key (K_{ENC}) is an AES block cipher, in particular an AES block cipher in the OFB mode or CTR mode, or a TDES block cipher.

12. The method according to Claim 11, wherein the first key-based check value and the second key-based check value are a MAC, in particular a CMAC or a CBC-MAC, and are calculated using the AES block cipher or the TDES block cipher.

13. The method according to any one of Claims 1 to 9, wherein, for encrypting the user data by means of the encryption key (K_{ENC}) and for generating of the key-based check values, an AES block cipher in the Galois/CTR mode is used.

14. The method according to any one of the preceding claims, wherein providing (201) the encryption key (K_{ENC}) and the check value key (K_{MAC}) on the security element (101) comprises the step of computing a secret, and the step of deriving the encryption key (K_{ENC}) and the check value key (K_{MAC}) from the computed secret.

15. The method according to Claim 14, wherein the data set (120) furthermore comprises a public key of an ephemeral key pair (PA), and the step of computing a secret comprises computing the secret based on the public key of the ephemeral key pair (PA) and on a private key (dB) securely stored on the security element (101).

16. The method according to Claim 15, wherein the data set (120) furthermore comprises a signature of the public key of the ephemeral key pair (PA) or of a part thereof.

17. A security element (101) with:
a communication interface (105) which is designed to receive a data set (120) transmitted by a background system (111), wherein the completely transmitted data set (120) comprises a first cipher text (c₁), a second cipher text (c₂), a check value of the first cipher text (h(c₁)), a check value of the second cipher text (h(c₂)), a check value of a first key-based check value (h(MAC₁)), wherein the check value of the first cipher text (h(c₁)) is included in the first key-based check value (MAC₁), a check value of a second key-based check value (h(MAC₂)), wherein the first key-based check value (MAC₁) and the check value of the second cipher text (h(c₂)) are included in the second key-based check value (MAC₂), as well as a signature of the check value of the first cipher text and the check value of the first key-based check value (Sign₁[h(c₁)∥(MAC₁)]); and
a processor (103) which is designed to verify, based on an encryption key (K_{ENC}) and a check value key (K_{MAC}), the data set (120) and to decode the first cipher text (c₁) and the second cipher text (c₂).

18. A background system, in particular a server, (111) with
a processor which is designed to encrypt user data by means of an encryption key (K_{ENC}) using a cipher in order to obtain at least a first cipher text (c₁) and a second cipher text (c₂); and
a communication interface (113) which is designed to transmit a data set (120) to a security element (101), wherein the completely transmitted data set (120) comprises the first cipher text (c₁), the second cipher text (c₂), a check value of the first cipher text (h(c₁)), a check value of the second cipher text (h(c₂)), a check value of a first key-based check value (h(MAC₁)), wherein the check value of the first cipher text (h(c₁)) is included in the first key-based check value (MAC₁), a check value of a second key-based check value (h(MAC₂)), wherein the first key-based check value (MAC₁) and the check value of the second cipher text (h(c₂)) are included in the second key-based check value (MAC₂), as well as a signature of the check value of the first cipher text and the check value of the first key-based check value (Sign₁[h(c₁)∥h(MAC₁)]).

## Revendications

1. Procédé (200) pour la transmission fiable de données utiles à un élément de sécurité (101), dans lequel le procédé (200) comprend :
la préparation (201) d'une clé de chiffrement (K_{ENC}) et d'une clé de valeur de contrôle (K_{MAC}) sur l'élément de sécurité (101) ;
le chiffrement (203) des données utiles au moyen de la clé de chiffrement (K_{ENC}) en utilisant un code pour générer au moins un premier cryptogramme (c₁) et un second cryptogramme (c₂) ;
la transmission (205) d'un ensemble de données (120) à l'élément de sécurité (101), dans lequel l'ensemble de données transmis en totalité (120) comprend le premier cryptogramme (c₁), le second cryptogramme (c₂), une valeur de contrôle du premier cryptogramme (h(c₁)), une valeur de contrôle du second cryptogramme (h(c₂)), une valeur de contrôle d'une première valeur de contrôle se basant sur une clé (h(MAC₁)), dans lequel la valeur de contrôle du premier cryptogramme (h(c₁)) entre dans la première valeur de contrôle se basant sur une clé (MAC₁), une valeur de contrôle d'une seconde valeur de contrôle se basant sur une clé (h(MAC₂)), dans lequel la première valeur de contrôle se basant sur une clé (MAC₁) et la valeur de contrôle du second cryptogramme (h(c₂)) entrent dans la seconde valeur de contrôle se basant sur une clé (MAC₂), ainsi qu'une signature sur la valeur de contrôle du premier cryptogramme et la valeur de contrôle de la première valeur de contrôle se basant sur une clé (Sign₁[h(c₁)∥h(MAC₁)]).

2. Procédé selon la revendication 1, dans lequel un paramètre d'initialisation (IV_{MAC}) entre en outre dans la première valeur de contrôle se basant sur une clé (MAC₁).

3. Procédé selon la revendication 1 ou 2, dans lequel à l'étape (205) de la transmission de l'ensemble de données (120) à l'élément de sécurité (101) un premier message (121), qui comprend la valeur de contrôle du premier cryptogramme (h(c₁)) et la valeur de contrôle de la première valeur de contrôle se basant sur une clé (h(MAC₁)) et un deuxième message (123), qui comprend la valeur de contrôle du second cryptogramme (h(c₂)) et la valeur de contrôle de la seconde valeur de contrôle se basant sur une clé (h(MAC₂)), sont transmis à l'élément de sécurité (101).

4. Procédé selon la revendication 3, dans lequel le premier message (121) comprend en outre la signature sur la valeur de contrôle du premier cryptogramme et la valeur de contrôle de la première valeur de contrôle se basant sur une clé Sign₁[h(c₁)∥h(MAC₁)].

5. Procédé selon la revendication 4, dans lequel le procédé comprend les autres étapes en ce qu'en réponse à la transmission du premier message (121) à l'élément de sécurité (101) la signature sur la valeur de contrôle du premier cryptogramme (h(c₁)) et la valeur de contrôle de la première valeur de contrôle se basant sur une clé (h(MAC₁)) est contrôlée par l'élément de sécurité (101) et, dans le cas où la signature ne peut pas être vérifiée par l'élément de sécurité (101), l'élément de sécurité (101) interrompt le processus.

6. Procédé selon l'une des revendications 3 à 5, dans lequel le deuxième message (123) comprend en outre le premier cryptogramme (c₁).

7. Procédé selon l'une des revendications précédentes, dans lequel l'ensemble de données (120) comprend en outre une signature sur la valeur de contrôle de la seconde valeur de contrôle se basant sur une clé Sign₂[h(MAC₂)].

8. Procédé selon la revendication 7, dans lequel à l'étape (205) de la transmission de l'ensemble de données (120) à l'élément de sécurité (101) un autre message (131) est transmis à l'élément de sécurité (101), qui comprend la signature sur la valeur de contrôle de la seconde valeur de contrôle se basant sur une clé Sign₂[h(MAC₂)].

9. Procédé selon l'une des revendications précédentes, dans lequel il s'agit dans le cas de la valeur de contrôle du premier cryptogramme (h(c₁)) d'une valeur de hachage du premier cryptogramme (h(c₁)) et dans le cas de la valeur de contrôle du second cryptogramme (h(c₂)) d'une valeur de hachage du second cryptogramme (h(c₂)).

10. Procédé selon l'une des revendications précédentes, dans lequel il s'agit dans le cas du code qui est utilisé pour le chiffrement des données utiles au moyen de la clé de chiffrement (K_{ENC}) d'un code de flux qui génère un flux de clés dans une partie se basant sur une clé du procédé, flux au moyen duquel le premier cryptogramme (c₁) et le second cryptogramme (c₂) sont générés dans une partie du procédé ne se basant pas sur une clé.

11. Procédé selon la revendication 10, dans lequel il s'agit dans le cas du code qui est utilisé pour le chiffrement des données utiles au moyen de la clé de chiffrement (K_{ENC}) d'un code de blocs AES, en particulier un code de blocs AES en mode OFB ou en mode CTR ou d'un code de blocs TDES.

12. Procédé selon la revendication 11, dans lequel la première valeur se basant sur une clé et la seconde valeur se basant sur une clé sont un MAC, en particulier un CMAC ou un CBC-MAC, et sont calculées en utilisant le code de blocs AES ou le code de blocs TDES.

13. Procédé selon l'une des revendications 1 à 9, dans lequel pour le chiffrement des données utiles au moyen de la clé de chiffrement (K_{ENC}) et pour l'établissement des valeurs de contrôle se basant sur une clé un code de blocs AES en mode Galois/CTR est utilisé.

14. Procédé selon l'une des revendications précédentes, dans lequel la préparation (201) de la clé de chiffrement (K_{ENC}) et de la clé de valeur de contrôle (K_{MAC}) sur l'élément de sécurité (101) comprend l'étape du calcul d'un secret et l'étape de la déduction de la clé de chiffrement (K_{ENC}) et de la clé de valeur de contrôle (K_{MAC}) à partir du secret calculé.

15. Procédé selon la revendication 14, dans lequel l'ensemble de données (120) comprend en outre une clé publique d'une paire de clés éphémères (PA) et l'étape du calcul d'un secret comprend le calcul du secret sur la base de la clé publique d'un secret de la paire de clés éphémères (PA) et d'une clé publique (dB) déposée de manière fiable sur l'élément de sécurité (101).

16. Procédé selon la revendication 15, dans lequel l'ensemble de données (120) comprend en outre une signature sur la clé publique de la paire de clés éphémères (PA) ou d'une partie d'entre elles.

17. Elément de sécurité (101) avec :
une interface de communication (105) qui est configurée pour recevoir un ensemble de données (120) transmis par un système d'arrière-plan (111), dans lequel l'ensemble de données transmis en totalité (120) comprend un premier cryptogramme (c₁), un second cryptogramme (c₂), une valeur de contrôle du premier cryptogramme (h(c₁)), une valeur de contrôle du second cryptogramme (h(c₂)), une valeur de contrôle d'une première valeur de contrôle se basant sur une clé (h(MAC₁)), dans lequel la valeur de contrôle du premier cryptogramme (h(c₁)) entre dans la première valeur de contrôle se basant sur une clé (MAC₁), une valeur de contrôle d'une seconde clé de contrôle se basant sur une clé (h(MAC₂)), dans lequel la première valeur se basant sur une clé (MAC₁) et la valeur de contrôle du second cryptogramme (h(c₂)) entrent dans la seconde valeur de contrôle se basant sur une clé (MAC₂), ainsi qu'une signature sur la valeur de contrôle du premier cryptogramme et la valeur de contrôle de la première valeur se basant sur une clé (Sign₁[h(c₁)∥h(MAC₁)]) ; et
un processeur (103) qui est configuré pour vérifier sur la base d'une clé de chiffrement (K_{ENC}) et d'une clé de valeur de contrôle (K_{MAC}) l'ensemble de données (120) et déchiffrer le premier cryptogramme (c₁) et le second cryptogramme (c₂).

18. Système d'arrière-plan, en particulier un serveur (111), avec :
un processeur qui est configuré pour chiffrer des données utiles au moyen d'une clé de chiffrement (K_{ENC}) en utilisant un code pour obtenir au moins un premier cryptogramme (c₁) et un second cryptogramme (c₂) ; et
une interface de communication (113) qui est configurée pour transmettre un ensemble de données (120) à un élément de sécurité (101), dans lequel l'ensemble de données transmis en totalité (120) comprend le premier cryptogramme (c₁), le second cryptogramme (c₂), une valeur de contrôle du premier cryptogramme (h(c₁)), une valeur du second cryptogramme (h(c₂)), une valeur de contrôle d'une première valeur de contrôle se basant sur une clé (h(MAC₁)), dans lequel la valeur de contrôle du premier cryptogramme (h(c₁)) entre dans la première valeur de contrôle se basant sur une clé (MAC₁), une valeur de contrôle d'une seconde valeur de contrôle se basant sur une clé (h(MAC₂)), dans lequel la première valeur de contrôle se basant sur une clé (MAC₁) et la valeur de contrôle du second cryptogramme (h(c₂)) entrent dans la seconde valeur de contrôle se basant sur une clé (MAC₂), ainsi qu'une signature sur la valeur de contrôle du premier cryptogramme et la valeur de contrôle de la première valeur de contrôle se basant sur une clé (Sign₁[h(c₁)∥h(MAC₁)]).
